# EUROPEAN PATENT APPLICATION

(11) **EP 3 123 904 A1**
(43) Date of publication of application: **01.02.2017**
(21) Application number: 16163404.3
(22) Date of filing: 31.03.2016
(51) Int. Cl.: A47F 11/10, A47F 3/00

(54) **SHOWCASE**

(30) Priority: 31.07.2015 US 201562199373 P; 26.08.2015 KR 20150120221
(71) Applicant: Samsung Electronics Co., Ltd., Gyeonggi-do 16677 (KR)
(72) Inventor: LEE, A Rum, Gangwon-do (KR); MIN, Kwan Sik, Gyeonggi-do (KR); SOHN, Sang Hyun, Gyeonggi-do (KR)
(74) Representative: Walaski, Jan Filip

(57) **Abstract**

A showcase is disclosed. The showcase includes a display module (10). By using the light source (13) and the light guiding plate (12) of the display module (10), a portion of light generated by the light source (13) can be emitted through the rear surface of the light guiding plate (12) to illuminate an object (P) and then the portion of light source (13) can be regathered into the light guiding plate (12) again to illuminate the display module (10).

## Description

The present invention relates to a showcase used to display a product.

Generally, showcases are used to display various objects for exhibition.

The showcase includes a housing in which an object is displayed, a transparent plate, such as a tempered glass, configured to cover a front of the housing, and a light source for generating light. The showcase is used to protect the object from the external environment as well as illuminate the object with light to improve viewing of the object within the showcase

Among showcases, there is a showcase having a display panel, such as a liquid crystal display (LCD) panel, arranged in place of the transparent plate to display an image.

Aspects of the exemplary embodiments provide a showcase having an improved structure.

In accordance with an aspect of an exemplary embodiment, this is provided a showcase including a display module and a housing. The display module includes a light guide plate comprising a plurality of prism grooves having triangular shape disposed on the front surface of the light guide plate and a light source configured to emit light into the light guide plate. The housing includes a reflector. At least a portion of light generated by the light source is reflected by the prism grooves to emit through a rear surface of the light guide plate to the showing space and the portion of light is reflected back to the light guide plate by the reflector.

The display module comprises a pair of light sources corresponding to the left and right sides of the light guide plate, and each of the prism grooves has a form of an isosceles triangle, and two oblique sides of the isosceles triangle correspond to the left and right sides of the light guide plate.

Each of the prism grooves may have a vertical angle ranged from 80 to 140 degrees.

The oblique sides of the prism groove may be formed to be about 50*µ*m or less long.

The light source may include a substrate extending to correspond to a side of the light guide plate, and a plurality of light emitting diodes (LEDs) arranged on the substrate. Sizes of the prism grooves increase with the distance from the light source.

Quantity of the prism grooves increase with the distance from the light source.

The showcase may further include a display panel arranged in front of the light guide plate.

The portion of the light reflected back to the light guiding plate illuminates the display panel.

The display module may include a middle mold configured to support the display panel, a front chassis combined onto the front side of the middle mold configured to support the display panel installed in the middle mold, and a rear chassis combined onto the rear side of the middle mold configured to maintain the light guide plate and the light source, and the middle mold, front chassis, and rear chassis may each be formed in the form of a rectangular ring to pass light.

The showcase may further include a stand, located inside the showing space, configured to support an object to be displayed.

In accordance with an aspect of an exemplary embodiment, this is provided a display module including a light guide plate comprising a plurality of prism grooves having triangular shape disposed on the front surface of the light guide plate; and a light source configured to emit light into the light guide plate; wherein at least a portion of light generated by the light source is reflected by the prism grooves to emit through a rear surface of the light guide plate.

The display module may further include a display panel positioned in front of the light guiding plate.

At least another portion of light generated by the light source emits through the front surface of the light guiding plate to illuminate the display panel.

Other aspects, advantages, and salient features of the disclosure will become apparent to those skilled in the art from the following detailed description, which, taken in conjunction with the annexed drawings, discloses exemplary embodiments of the disclosure.

The above and other aspects of the present disclosure will become more apparent by describing in detail exemplary embodiments thereof with reference to the attached drawings in which:
FIG. 1 is a perspective view of a showcase, according to an exemplary embodiment;
FIG. 2 is a cross-sectional view of a showcase, according to an exemplary embodiment;
FIG. 3 is an exploded view of a showcase, according to an exemplary embodiment;
FIG. 4 is a cross-sectional view of a display module of a showcase, according to an exemplary embodiment;
FIG. 5 shows cross-sectional views of a display guide plate and a light source of a showcase, according to an exemplary embodiment;
FIG. 6 is a cross-sectional view of a display guide plate and a light source of a showcase, according to an exemplary embodiment;
FIG. 7 is a cross-sectional view of a display guide plate and a light source of a showcase, according to an exemplary embodiment; and
FIG. 8 is a perspective view of a showcase, according to an exemplary embodiment.

Throughout the drawings, like reference numerals will be understood to refer to like parts, components, and structures.

Showcases in accordance with an exemplary embodiment will now be described in detail with reference to accompanying drawings.

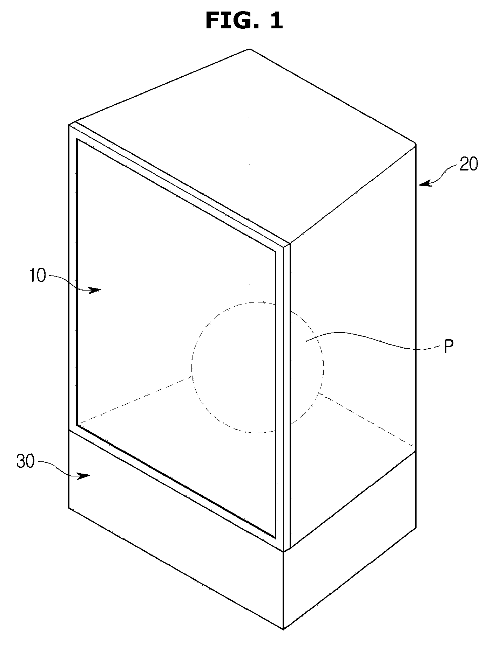

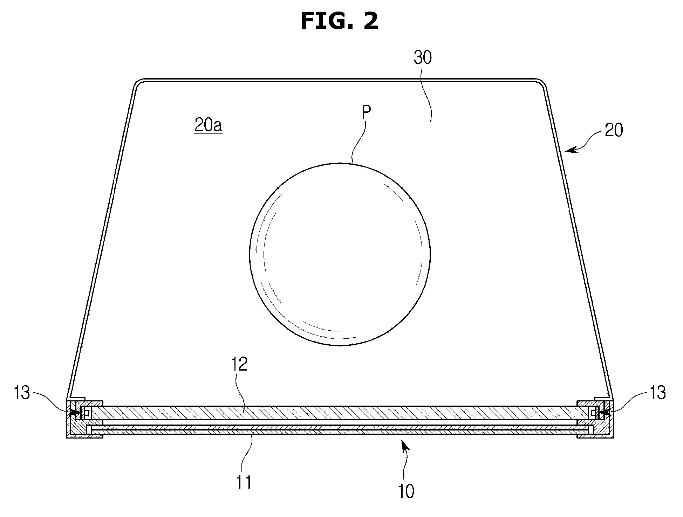

FIG. 1 is a perspective view of a showcase, according to an exemplary embodiment. FIG. 2 is a cross-sectional view of a showcase, according to an exemplary embodiment. As shown in FIGS. 1 and 2, a showcase in accordance with an exemplary embodiment is a device for accommodating an object P for display and irradiating light onto the object P to improve viewing of the object.

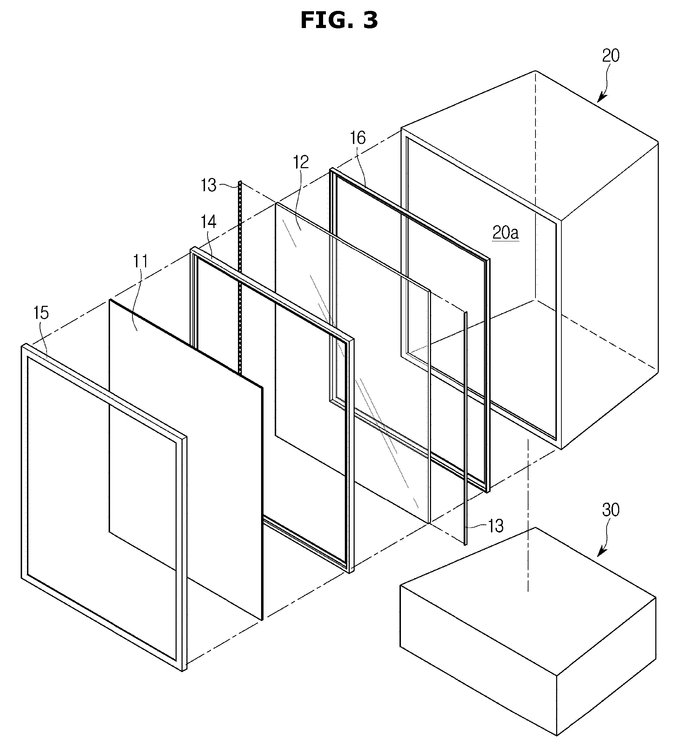

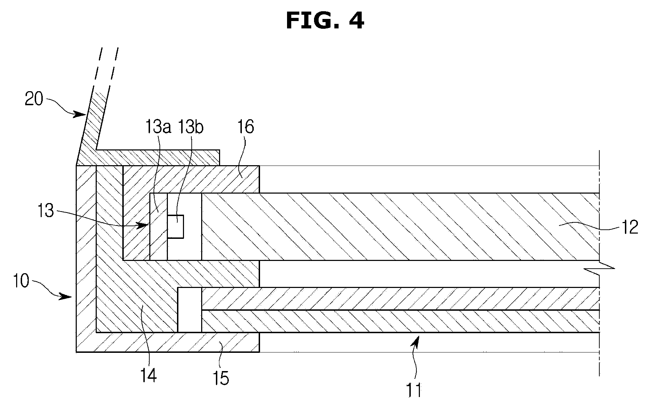

FIG. 3 is an exploded view of a showcase, according to an exemplary embodiment. FIG. 4 is a cross-sectional view of a display module of a showcase, according to an exemplary embodiment. As shown in FIGS. 1 to 4, the showcase includes a display module 10 for displaying an image, a housing 20 coupled onto the rear side of the display module 10 to form a display space 20a that accommodates the object P, and a stand 30 coupled onto the bottom of the display module 10 and the housing 20 such that the display module 10 and the housing 20 supported on top of the stand 30.

The display module 10 includes a display panel 11, a light guide plate 12 arranged behind the display panel 11 for guiding light, and two light sources 13 arranged toward the left and right sides of the light guide plate 12 for supplying light toward the left side and the right side of the light guide plate 12.

A middle mold 14 arranged between the display panel 11 and the light guide plate 12 supports the display panel 11, a front chassis 15 maintains the display panel 11 installed in the middle mold 14 by supporting the outer side of a front portion of the display panel 11, and a rear chassis 16 coupled onto the rear portion of the middle mold 14 to supports the light guide plate 12 and the light source 13 therein.

The display panel 11 may be formed of a liquid crystal panel in the form of a rectangular plate for receiving light supplied through the light guide plate 12 to display an image.

The light guide plate 12 may be formed by a transparent material to pass light with a form of a rectangular plate corresponding to the display panel 11.

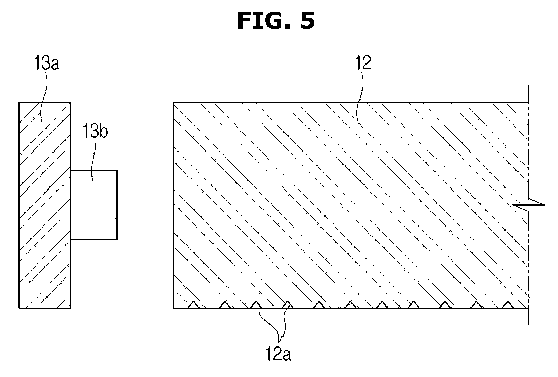

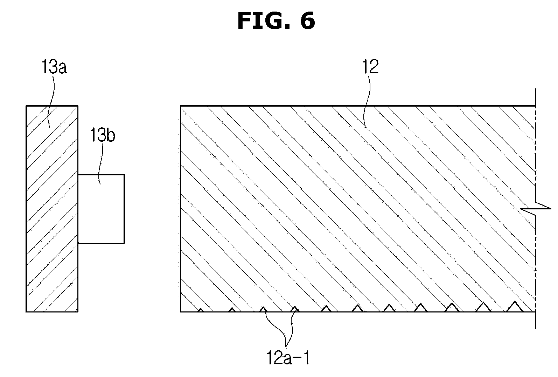

FIG. 5 shows cross-sectional views of a display guide plate and a light source of a showcase, according to an exemplary embodiment. FIG. 6 is a cross-sectional view of a display guide plate and a light source of a showcase, according to an exemplary embodiment. On the front of the light guide plate 12, reflection patterns are formed to reflect light backward, as shown in FIG. 5. The reflection patterns are formed by concaved prism grooves 12a having a triangular cross section, as shown in FIG. 5. Each of the prism grooves 12a is formed such that the base is located opposite to the display panel 11 while the two oblique sides correspond to both sides of the light guide plate 12 on which the light sources 13 are arranged.

In this embodiment, each of the prism grooves 12a is formed as an isosceles triangle with the two oblique sides having the same length, which may be 50*µ*m or less. Furthermore, the vertical angle of the prism grooves 12a is formed to be in a range from 80 to 140 degrees, such that most of light entering into the light guide plate 12 through both sides of the light guide plate 12 may be reflected backward by the two oblique sides of each of the prism grooves 12a.

The light sources 13 each include a substrate 13a in the form of a bar vertically extending to correspond to the left side or the right side of the light guide plate 12, and light emitting diodes (LEDs) 13b arranged on a side of the substrate 13a corresponding to a side of the light guide plate 12 for irradiating light toward the side of the light guide plate 12. The LEDs 13b are arranged at a distance from one another on the side of the substrate 13a.

Each of the middle mold 14, the front chassis 15, and the rear chassis 16 has the form of a rectangular ring. The structure of the middle mold 14, the front chassis 15, and the rear chassis 16 supports the outer sides of the display panel 11 and light guide plate 12 while enabling the light that passes the light guide plate 12 to be delivered forward to the display panel 11 or backward to the housing 20.

The housing 20 is in the form of the hull with an open front such that the interior of the housing 20 constitutes the display space 20a to accommodate the object P for display. Inside the display space 20a, there may be a white reflector having about 80% of reflectivity.

The stand 30 is arranged under the display module 10 and housing 20 to provide support and contains various substrates 13a to drive the display module 10. The stand 30 allows the object P to be placed at a certain height or higher, thereby allowing a viewer to more conveniently view the object P in the display room 20a.

Operation of the showcase arranged as described above will now be described in detail.

First, with the object P placed in the display space 20a, light is generated from the LEDs 13b of the two light sources 13. The light generated from the LEDs 13b enters the light guide plate 12 through the left and right sides of the light guide plate 12. Most of the light entering the light guide plate 12 travels along the light guide plate 12 and is reflected backward by the oblique sides of the prism grooves 12a arranged on the front of the light guide plate 12. The reflected light is output backward through the rear of the light guide plate 12 and delivered into the display space 20a formed inside the housing 20, illuminating the display space 20a and the object P. With the white reflector formed on the inner surfaces of the housing 20 that constitutes the display space 20a, the light is reflected at the inner wall of the display room 20 to enter back into the light guide plate 12 through the rear of the light guide plate 12. The light entering into the light guide plate 12 through the rear passes through the light guide plate 12 and is supplied to the display panel 11.

Accordingly, most of the light generated by the light sources 13 is reflected backward by the prism grooves 12a, illuminating the inside of the display space 20a and is again reflected back to the display panel 11.

The reflective structure of the showcase reduces the need for additional separate light sources for illuminating the object P, thereby allowing the showcase to have a thin compact profile.

While the prism grooves 12a have the same size and are arranged at the same intervals in this embodiment, the size and arrangement are not limited thereto and it is also possible that some prism grooves 12a-1 located adjacent to the light sources 13 may be formed smaller in size than those 12a-1 located distant from the light sources 13, as shown in FIG. 6. In other words, it is possible that the farther the prism grooves are located from the light source 13, the larger they are formed in size.

With the prism grooves 12a-1 formed of different sizes, less reflection of light may occur at the prism grooves 12a-1 having a smaller size located in a region adjacent to the light source 13, which a relatively large amount of light reaches. On the contrary, more reflection of light may occur at the prism grooves 12a-1 having a larger size located in a region distant from the light source 13 that a relatively small amount of light reaches. Accordingly, light may be uniformly reflected by the prism grooves 12a-1 across the front of the light guide plate 12.

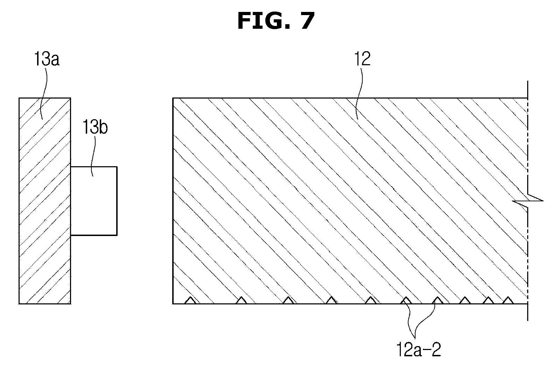

FIG. 7 is a cross-sectional view of a display guide plate and a light source of a showcase, according to an exemplary embodiment. In an exemplary embodiment shown in FIG. 7, the prism grooves 12a-2 may be formed to have the same size, but the gaps between the prism grooves 12a-2 are relatively wide in the region adjacent to the light source 13 while being relatively narrow in the region distant from the light source 13. In other words, it is possible that the quantity of prism grooves increases with the distance from the light source.

With the prism grooves 12a-2 formed at different intervals, less reflection of light may occur at the prism grooves 12a-2 in a region adjacent to the light source 13, which a relatively large amount of light reaches. On the contrary, more reflection of light may occur at the prism grooves 12a-2 in a region distant from the light source 13, which a relatively small amount of light reaches because the number of the prism grooves 12a-2 distant from the light source 13 is greater. Accordingly, light may be uniformly reflected by the prism grooves 12a-2 across the front of the light guide plate 12.

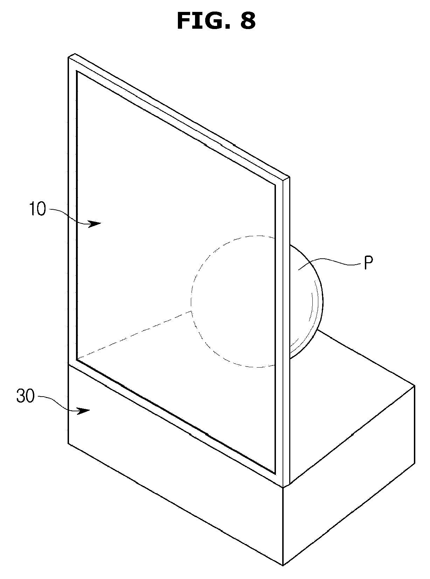

FIG. 8 is a perspective view of a showcase, according to an exemplary embodiment. While the showcase includes the housing 20 to accommodate the object P in FIG. 7, it is not limited thereto and is also possible to provide a showcase to allow the object P to be rested on the top of the stand 30 without a configuration corresponding to the housing, as shown in FIG. 8.

While the showcase has the display panel 11 arranged in front of the light guide plate 12 for displaying an image in this embodiment, the showcase is not limited thereto and may be configured without the display panel, which may instead be replaced by a transparent member, such as tempered glass.

Furthermore, while there are two light sources 13 respectively arranged toward the left and the right sides of the light guide plate 12 in this embodiment, the two light sources 13 may be arranged toward the top and bottom sides of the light guide plate 12, or there may be four light sources respectively arranged toward the four sides, i.e., the top, bottom, left, and right sides of the light guide plate.

Although the light source 13 includes the substrate 13a and the LEDs 13b in this embodiment, the light source 13 may employ point sources as LEDs or line sources that extend to correspond to the sides of the light guide plate.

According to aforementioned exemplary embodiments, a showcase includes a light guide plate and a light source corresponding to a side of the light guide plate. Prism grooves are formed on the front of the light guide plate, by which most of the light entering into the light guide plate from the light source travels across a display space located behind and is reflected back in the forward direction, thereby enabling illumination of the display space with the light source used for a display panel, which eliminates a need for an additional light source to illuminate the object in the display space, and thus allows the showcase to have a thin profile.

Several embodiments have been described, but a person of ordinary skill in the art will understand and appreciate that various modifications can be made without departing the scope of the present invention as defined by the claims.

## Claims

1. A showcase comprising:
a light guide plate arranged ahead of an object for display; and
at least one light source arranged toward at least one of top, bottom, left and right sides of the light guide plate,
wherein the light guide plate includes a plurality of concaved prism grooves formed in a triangular form on the front of the light guide plate.

2. The showcase of claim 1,
wherein the light source comprises a pair of light sources that correspond to the left and right sides of the light guide plate, and
wherein each of the prism grooves has the form of an isosceles triangle, and two oblique sides of the isosceles triangle correspond to the left and right sides of the light guide plate.

3. The showcase of claim 2,
wherein each of the prism grooves has a vertical angle ranged from 80 to 140 degrees.

4. The showcase of claim 2 or 3,
wherein each of the two oblique sides of the prism groove is formed to be about 50*µ*m or less long.

5. The showcase of any one of the preceding claims,
wherein the light source includes a substrate extending to correspond to a side of the light guide plate, and a plurality of light emitting diodes (LEDs) arranged on the substrate.

6. The showcase of any one of the preceding claims,
wherein a size of one of the prism grooves arranged adjacent to the light source is smaller than a size of one of the prism grooves arranged distant from the light source.

7. The showcase of any one of the preceding claims,
wherein a gap between at least two of the prism grooves arranged adjacent to the light source are wider than a gap between at least two of the prism grooves arranged distant from the light source.

8. The showcase of any one of the preceding claims,
further comprising: a display panel arranged ahead of the light guide plate.

9. The showcase of any one of the preceding claims,
further comprising: a housing arranged behind the light guide plate and housing the object for display.
